# EUROPEAN PATENT APPLICATION

(11) **EP 3 483 875 A1**
(43) Date of publication of application: **15.05.2019**
(21) Application number: 17306571.5
(22) Date of filing: 14.11.2017
(51) Int. Cl.: G10L 15/22, G10L 17/24, G06F 21/31

(54) **IDENTIFIED VOICE-BASED COMMANDS THAT REQUIRE AUTHENTICATION**

(71) Applicant: InterDigital CE Patent Holdings, 75017 Paris (FR)
(72) Inventor: VISWANATHAN, Subha, 600089 Chennai (IN)
(74) Representative: Amor, Rim

(57) **Abstract**

A method and apparatus are described including receiving a voice command, determining if the received voice command is one of a set of identified voice commands that require authentication, and in the case where it is determined that the voice command is one of a set of identified voice commands that require authentication, receiving a voiced code, the voiced code corresponding to a code transmitted to a selected client device in response to the voice command, and performing, responsive to a comparison of the received voiced code and a code corresponding to the code transmitted to the selected client device, an action corresponding to the received voice command. Otherwise performing the action corresponding to the received voice command in the case where it is determined that the voice command does not require authentication.

## Description

### FIELD

The proposed method and apparatus are directed to identified voice-based commands that require authentication.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Voice-based devices, such as, for example, Amazon Echo or Apple's Siri, are operated using voice-based commands. Such voice-based devices are becoming more common and ubiquitous. Gateways or gateway devices are typically used in a home (residence) and/or a small business environment. The proposed method and apparatus are described using such an environment. Gateways or gateway devices include, but are not limited to, routers, bridges, brouters (bridge-router) and set top boxes etc. There are certain commands that may be included in a set of specific (identified, pre-defined) commands, such as, but not limited to, parental control commands, that require authentication. Other types of voice-based commands that may require authentication include accessing private (personal) information, accessing bank accounts, accessing credit card statements and histories, making credit card purchases. Such commands can be voice-based commands. Such commands, including parental control commands, using voice-based commands cannot always securely authenticate a person. There are many papers describing this problem of voice-based authentication using audio frequency, which is not completely fool proof. Hence, authentication for specific (identified, pre-defined) voice-based commands, such as parental control commands, using voice remains problematical.

Various techniques for voice-based security systems describe implementation of voice-security systems for different applications, such as telephone networks, computer networks, cars and elevators.

US20070061413A1 describes the fundamental frequency of a human's voice (often referred to as the person's "pitch"). The fundamental frequency of a human's voice is measurable and tends to decrease after puberty. Accordingly, tables of fundamental frequencies and their associated ages may also be used to determine a speaker's likely level of maturity. A voice analysis routine uses these techniques to identify whether the speaker is a responsible adult or a child.

Other features that are used for voice verification (authentication) involve, for example, pitch frequency, power spectrum values, spectrum coefficients and linear prediction coding.

Techniques for voice-based user authentication for mobile access to network services are described in US 7,158,776 B1, which describes authenticating a user using voice print for accessing network services. But, the voice print can be imitated by anyone and hence, to circumvent such manipulation device IDs are used for authentication. US 7,158,776 B1 does not cater to support of voice-based commands requiring authentication, such as parental commands, where a child can imitate the voice of a responsible adult and use their device IDs.

Location-based voice-print authentication methods and systems obtain credential information for the person (e.g., using a coded card or keypad for username and password), a voice print of the person, and the current geographical location of the User (person). Location-based voice-print authentication methods and systems do not solve the current problem in an environment.

There were other alternative techniques for voice identification which are not just limited to neural networks processing for voices with a reference set, password verification using, selectively adjustable signal thresholds, and simultaneous voice recognition and verification. These include text-dependent speaker recognition methods that rely on analysis of a predetermined utterance. Text-independent methods do not rely on any specific spoken text. In both cases, however, a classifier produces the speaker's representing metrics, which are thereafter compared with preselected thresholds.

In all of the cases above, the number of false positives and true negatives are high. There is thus a widely recognized need for, and it would be highly advantageous to have a more reliable and secured voice authentication system. The proposed method and apparatus is more reliable and secure in the environment.

### SUMMARY

The need for parental control commands and other voice-based commands requiring authentication is a necessity. The proposed method and apparatus addresses this need.

In a first aspect, a method is described including receiving a voice command, determining if the received voice command is one of a set of identified voice commands that require authentication, and in the case where it is determined that the voice command is one of a set of identified voice commands that require authentication, receiving a voiced code, the voiced code corresponding to a code transmitted to a selected client device in response to the voice command, and performing, responsive to a comparison of the received voiced code and a code corresponding to the code transmitted to the selected client device, an action corresponding to the received voice command. Otherwise performing the action corresponding to the received voice command in the case where it is determined that the voice command does not require authentication.

In another aspect an apparatus including at least one processor configured for receiving a voice command, determining if the received voice command is one of a set of identified voice commands that require authentication, and in the case where it is determined that the voice command is one of a set of identified voice commands that require authentication, receiving a voiced code, the voiced code corresponding to a code transmitted to a selected client device in response to the voice command, and performing, responsive to a comparison of the received voiced code and a code corresponding to the code transmitted to the selected client device, an action corresponding to the received voice command. Otherwise performing the action corresponding to the received voice command in the case where it is determined that the voice command does not require authentication.

In an embodiment, the method or the apparatus further includes generating the code for transmission to the selected client device for voicing by the user.

In an embodiment, the method or the apparatus further includes transmitting the code to the selected client device in response to a request from the selected client device.

In an embodiment, the code is encrypted with an authorization code related to the selected client device.

In an embodiment, the method or the apparatus further includes establishing a session with a gateway, streaming the voiced code to the gateway, and receiving data representative of the authentication from the gateway.

In an embodiment, the method or the apparatus further includes receiving a command for the code from a gateway, streaming the code to the gateway in response to the command, and receiving results from the authentication from the gateway.

In another aspect, a method is described including receiving a code, the code being transmitted in response to a voice command received at a voice based device, providing the code to a user to enable the code to be voiced to the voice based device to cause the voice based device to respond to the voice command in the case where the voiced code corresponds to data representative of the received code.

In another aspect, an apparatus is described including at least one processor configured for receiving a code, the code being transmitted in response to a voice command received at a voice based device, providing the code to a user to enable the code to be voiced to the voice based device to cause the voice based device to respond to the voice command in the case where the voiced code corresponds to data representative of the received code.

In an embodiment, the method or the apparatus further includes receiving the code, the code being encrypted, decrypting the encrypted code, and displaying the decrypted code to the user.

In an embodiment, the received code is encrypted with an authorization code related to the selected client device.

In another aspect, a method is described including receiving a request for a code, generating the code, transmitting the code to a client device in response to the request, the code encrypted with an authorization code, receiving data representative of a voiced code, comparing the received data representative of the voiced code with the code, and transmitting results of the comparison to a voice-based device.

In another aspect, an apparatus is described including at least one processor configured for receiving a request for a code, generating the code, transmitting the code to a client device in response to the request, the code encrypted with an authorization code, receiving data representative of a voiced code, comparing the received data representative of the voiced code with the code, and transmitting results of the comparison to a voice-based device.

In an embodiment, the voiced code is converted to text in order to perform the comparison.

In another aspect, a computer-readable medium is described including instructions, which, when executed by a computer, cause the computer to carry out the method of any of claims 1, 3 to 8, 10 to 12 and 14.

Since elements of embodiments can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

The proposed method and apparatus is best understood from the following detailed description when read in conjunction with the accompanying drawings. The drawings include the following figures briefly described below:
Fig. 1 shows a schematic diagram of an exemplary deployment configuration in accordance with the principles of the proposed method and apparatus.
Fig. 2 shows a schematic diagram of an exemplary deployment configuration in accordance with the principles of the proposed method and apparatus.
Fig. 3 shows a schematic diagram of an exemplary deployment configuration in accordance with the principles of the proposed method and apparatus.
Fig. 4 is a flowchart of an exemplary voice-based device that is separate from a gateway in accordance with the principles of the proposed method and apparatus.
Fig. 4A is a flowchart of an alternative exemplary embodiment of a voice-based device that is separate from a gateway in accordance with the principles of the proposed method and apparatus.
Fig. 5 is a flowchart of an exemplary gateway that is separate from a voice-based device in accordance with the principles of the proposed method and apparatus.
Fig. 5A is a flowchart of an alternative exemplary embodiment of a gateway that is separate from a voice-based device in accordance with the principles of the proposed method and apparatus.
Fig. 6 is a flowchart of an exemplary client device in accordance with the principles of the proposed method and apparatus.
Fig. 7 is a flowchart of an exemplary voice-based device that is co-located with the gateway or within the gateway in accordance with the principles of the proposed method and apparatus.
Fig. 8 is a flowchart of an exemplary gateway in communication with cloud service in accordance with the principles of the proposed method and apparatus.
Fig. 9 is a block diagram of an exemplary apparatus, such as a gateway, vice-based device and/or client device for practicing the proposed method.
Fig. 10 is a block diagram of an exemplary gateway in accordance with the principles of the proposed method and apparatus.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

Embodiments of the proposed method and apparatus uses the features of a gateway (edge) device and a companion device for authentication of a person issuing (using) one of a set of identified (specific, pre-defined) commands. For example, when a responsible adult says "Block social sites for 2 hours", the gateway understands that this is one of a set of identified (specific, pre-defined) commands that requires authentication, such as a parental control command. Some voice-based devices include artificial intelligence (AI) processing capabilities in order to decode the voice-based commands issued by a user. For example, a user may utter (speak, voice) the above command as "Can you block social sites for 2 hours?" or "Please block social sites for 2 hours." or "Block for 2 hours all social sites." or "Can you please block social sites.". The AI processing of voice-based devices determines that all of the above mean that the user wants to block social sites for 2 hours. Voice-based commands are converted to Intent. The above commands are converted to "BLOCK_SOCIAL_SITES_FOR_2_HOURS".

The gateway sends a number (token, code, value, captcha) to the responsible adult's companion device, and requests that the responsible adult voice (speak, utter) the code (number, token, value, captcha) (to the voice-based device) that the gateway sent (transmitted, forwarded) to the responsible adult's companion device. As used herein the code may be letters, numbers, word, phrases, a captcha or any combination thereof. There will be a separate application (APP) that runs in the companion device, which the responsible adult may open using a password. The responsible adult can then retrieve the code (number, token, value, captcha) (that the gateway sent (forwarded, transmitted) to the responsible adult's companion device). The responsible adult can then utter (voice, speak) the number (code, token, number, value, captcha etc.) to (through) the voice-based device to authenticate the responsible adult (user) who issued (voiced, spoke) the initial specific (identified, pre-defined) command. The generated number (code, token, number, value, captcha etc.) is cross checked (comparison) by the gateway and the gateway then performs the action or aborts performance of the action (does not perform the action) depending on the results of the comparison (cross check).

The companion device is generally the personal device, such as a smart phone, pager, an iPod, iPad, tablet, laptop, personal digital assistant (PDA) and the like. Since the gateway is aware of the all the personal devices in the environment (e.g., home, small business), the gateway will also be aware of (know) the media access control (MAC) addresses of the companion (personal) devices. The gateway can also control the companion (personal) devices and can map the companion (personal) devices to a particular person in the environment. Parental control commands will be used herein to describe the proposed method and apparatus. It should be noted that other voice-based commands may be among the set of identified (specific, pre-defined) commands that require authentication. A companion device is also called a client device.

Once parental control is enabled, a short message service (SMS)/Notification can be sent (forwarded, transmitted) to the responsible adult in the environment. The gateway can hold (store) a list of members (responsible adults) in the environment, who are capable of enabling/disabling parental control commands. Considering voice-based devices, such as Amazon Echo, there are now more than 10,000 applications that have been developed.

An exemplary scenario employing the proposed method and apparatus is as follows:
1. The user (e.g., responsible adult) utters (voices, speaks) a command to Amazon Echo or any similar voice-based device
2. The voice-based device checks whether this is one of a set of identified (specific, pre-defined) commands (e.g., parental control commands)
3. If so, the gateway asks for the token (code, number, value, captcha) that will be generated by a gateway in the environment (e.g., home or small business) and forwarded (sent, transmitted) to a (selected) personal (companion) device. The selected personal (companion) device may be selected by a responsible adult in a home environment or an administrator or business owner in a small business environment.
4. The user opens an application (app) on the companion (personal) device, which can be accessed using a pre-set password (and possibly a user identification (userid) code)
5. The user accesses the application (app) on the companion (personal) device, which may include pressing "Receive Code" or "Transmit Code" or "Generate Authentication Code" or the like
6. The request is sent to the gateway
7. The gateway has a database which is acquired during registration of one or more companion (personal) devices
   a. Device ID
   b. Manufacturer Information
   c. Name
   d. Authorization code
   e. Phone Number
   f. Device Serial Number
   g. Capabilities
   h. Personal Details etc.
8. The request from the companion (personal) device to the gateway will provide the Device ID and request for the code (token, number, value, captcha etc.) generation.
9. The gateway understands from whose device the request came, checks for the person's identity (name), and then generates the code (token, number, value, captcha etc.) which is encrypted with the particular user's authorization code. It should be noted that the authorization code (key) is effectively encryption using a static private key. This can be replaced with any other static or dynamic public or private key encryption method that provides at least the same level of security. The users' devices each have an authorization code. The authorization codes are stored in memory or a database in the gateway. The authorization code for each device will be provided by the device to the gateway when the device is registered or provisioned. The authorization code can be changed or updated using (via) the cloud service and the database will be synced with the cloud service on a regular (periodic) basis.
10. The received code (token, number, value, captcha etc.) encrypted with the authorization code is received at the user's companion (personal) device. The application (app) decrypts the code (token, number, value, captcha etc.) with the authorization code.
11. The received code (token, number, value, captcha etc.) encrypted with the authorization code is also received at the voice-based device. The voice-based device decrypts the code (token, number, value, captcha etc.) with the authorization code. This step is exercised if the voice-based device is not embedded in the gateway.
12. The decrypted code (token, number, value, captcha etc.) is uttered (spoken, voiced) by the user to the voice-based device. The code (token) is compared to the code (token, number, value, captcha etc.) received by the voice-based device from the gateway.
13. If the comparison is positive, the action of the voice-based command requiring authentication is performed.
14. If the comparison is negative, the action of the voice-based command requiring authentication is aborted (not executed or not performed). There may be a message uttered (voiced) to the user, such as "Not authorized to perform the command"

Three exemplary deployment configurations are set forth below. It is noted that these deployment configurations are not the only possible deployment configurations are should not be taken as limiting.

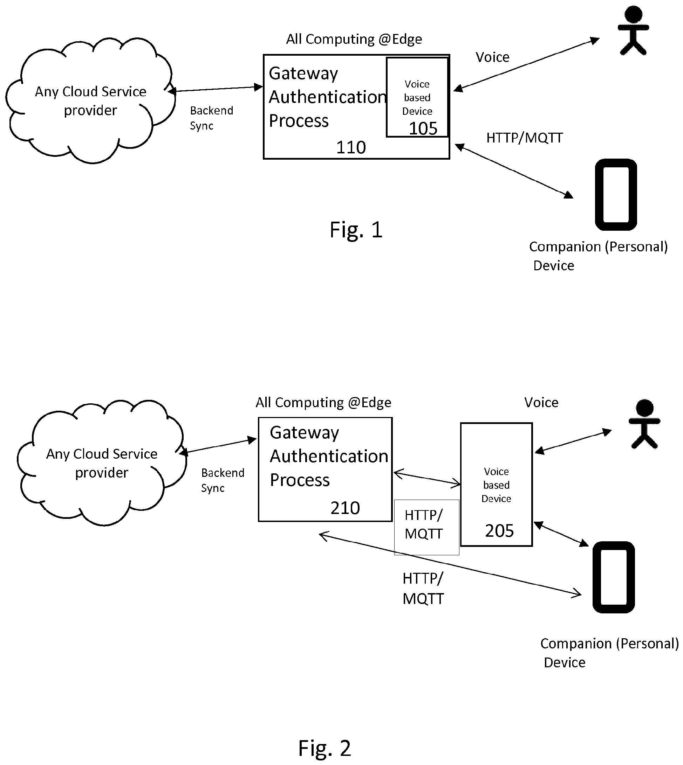

Fig. 1 shows a schematic diagram of an exemplary deployment configuration in accordance with the principles of the proposed method and apparatus. In this exemplary deployment configuration, the voice-based device 105 is integrated in the gateway 110.

Fig. 2 shows a schematic diagram of an exemplary deployment configuration in accordance with the principles of the proposed method and apparatus. In this exemplary deployment configuration, the voice-based device 205 is separate from the gateway 210 but in bi-directional communication with the gateway.

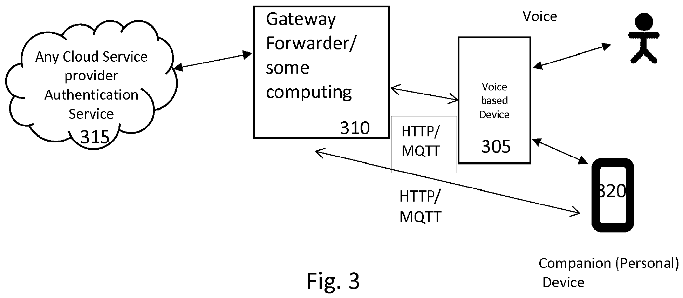

Fig. 3 shows a schematic diagram of an exemplary deployment configuration in accordance with the principles of the proposed method and apparatus. In this exemplary deployment configuration, the voice-based device 305 is separate from the gateway 310 but in bi-directional communication with the gateway and the gateway does not provide the code (token, number, value, captcha etc.). The cloud service 315 generates the code (token) and provides (transmits, forwards, sends) the generated code (token, number, value, captcha etc.) to the gateway 310. The gateway 310, in turn, provides (forwards, transmits, sends) the code (token, number, value, captcha etc.) to both the companion (personal) device 320 and the voice-based device 305.

Any device in the network that wants to communicate with the gateway must be registered with the gateway. It need not be just devices, it can also be things around. The present-day gateways (gateway devices) also act as IoT gateways. The registration can either be done in the cloud service or with the gateway where the entitled (registered) user will update his name, phone number and authorization code. The device ID and other information will get updated using the application present in the device. The term "phone number" is used loosely and may include any reasonable identification of a telecommunications device. For example, a cell phone may be identified by the International Mobile Equipment Identity (IMEI) or any equivalent identification.

A user's personal (companion) device is described above. Treatment (operation) of a personal device is differentiated from operation of a "thing" or "object" such as an IoT device (object, thing) in that if the request for a code originates from a user's personal (companion) device then the identified voice-based command requiring user authentication is applicable for all devices. If the request for a code originates from a "thing" such as an IoT thing (object, device) then the identified voice-based command requiring user authentication is applicable only to or for that device. For example, the command "Unlock the washing machine door" cannot be enabled from the dishwasher. Such a command can only be enabled from or by the user's personal (companion) device. The gateway will have a list of personal devices for a particular user or family of users that are permitted to issue identified voice-based commands requiring user authentication. A child may have a smart phone but the child's smart phone is not permitted to issue identified voice-based command that require user authentication. Similarly, a guest in the environment having a smart phone has no permission to issue identified voice-based commands requiring user authentication.

After registration, the gateway performs a polling mechanism on determining that there are LAN devices that are connected to the gateway. The gateway can also operate in interrupt mode. Whenever a new device attempts to connect to the network, the gateway will be interrupted and obtain (request) information regarding the device from the device. This is general gateway functionality, which includes the capability of maintaining the list of devices that are connected to the network and information about the devices in the list, at any instant of time. Generally, communication between voice-based devices and the gateway is accomplished using hypertext transfer protocol (HTTP) or message queue telemetry transport (MQTT) protocol or any equivalent. MQTT is a lightweight messaging protocol for use on top of the TCP/IP protocol suite.

With technological advances in artificial intelligence (AI), the voice recognition is more commonplace as are voice-based devices, such as Amazon's Echo and Apple's Siri. Such voice-based devices include application programmable interfaces (APIs) so that voice-based devices can be integrated with and control any device, such as gateways, televisions (TVs), set top boxes, washing machines, dryers, refrigerators, lighting, window shades, microwaves, ranges, dishwashers, security systems, computers, laptops, tablets (tablet computers), PDAs, pagers, etc. Such voice-based devices may also be a separate device or may be integrated with the gateway itself. Irrespective of the deployment scenario, the voice-based commands enhance the user's experience. The voice-based commands can be categorized as normal commands that do not require any authentication and identified (specific, pre-defined) voice-based commands that require authentication.

When a user utters (voices, speaks) a command to the voice-based device, the voice-based device sends (transmits, forwards) the command to the gateway, which first checks whether this command is one of the set of identified (specific, pre-defined) commands that require user authentication prior to being performed. "Enable social networking sites for 2 hours" and "Unlock the washing machine door" are two examples of voice-based commands that require user authentication before being performed. If the voice-based command is one of a set of identified (specific, pre-defined) commands, then the voice-based device will ask for the user to utter (speak, voice) a code (token, number, value, captcha etc.) that will be generated by the gateway and sent (forwarded, transmitted, provided) to the user's registered phone/device (companion (personal) device) of the user.

When the user opens the application (app) on the user's companion (personal) device, which is password protected, the application (app) requests code (token, number, value, captcha etc.) from the gateway and supplies its device information along with the request. This communication between the companion (personal) device and the gateway is accomplished using HTTP or MQTT or any equivalent protocol. The gateway accesses a secure database in the gateway and retrieves the authorization code for that particular device. The database can be located in the gateway or can be accessed securely from the cloud. The gateway generates a code (number, token, value, captcha etc.) and encrypts the code (token, number, value, captcha etc.) using the authorization code of the device and sends the encrypted code (token, number, value, captcha etc.) to the application (app) in the user's companion (personal) device. The application (app) of the user's companion (personal) device receives the code (token, number, value, captcha etc.) and decrypts using the device's authorization code. The application (app) of the user's companion (personal) device displays the code (token, number, value, captcha etc.) for the user on the user's companion (personal) device. The user's companion (personal) device may also be any device or thing that has the capability to display a small amount of data/text, such as a pager.

The gateway also sends (transmits, forwards) the code (token, value, number, captcha etc.) to the voice-based device. The code (token, value, number, captcha etc.) sent (transmitted, forwarded) to the voice-based device by the gateway may or may not be encrypted. If the code (token, value, number, captcha etc.) is encrypted then it must be decrypted using the device's authorization code. The user then utters (speaks, voices) the decrypted code (value, token, number, captcha, etc.) to the voice-based device. The voice-based device validates this code (token, value, number, captcha etc.) with the code (token, value, number, captcha etc.) received from the gateway. Once verified, the action corresponding to the voice-based command is performed. If the code (token, value, number, captcha etc.) is not verified (the user is not authenticated), then the action corresponding to the voice-based command is aborted. The result of the action being performed or aborted (not performed) is sent (transmitted, forwarded) to the companion (personal) device. If in the middle of any of the communication or the validation, there is a failure, then the action corresponding to the voice-based command is aborted.

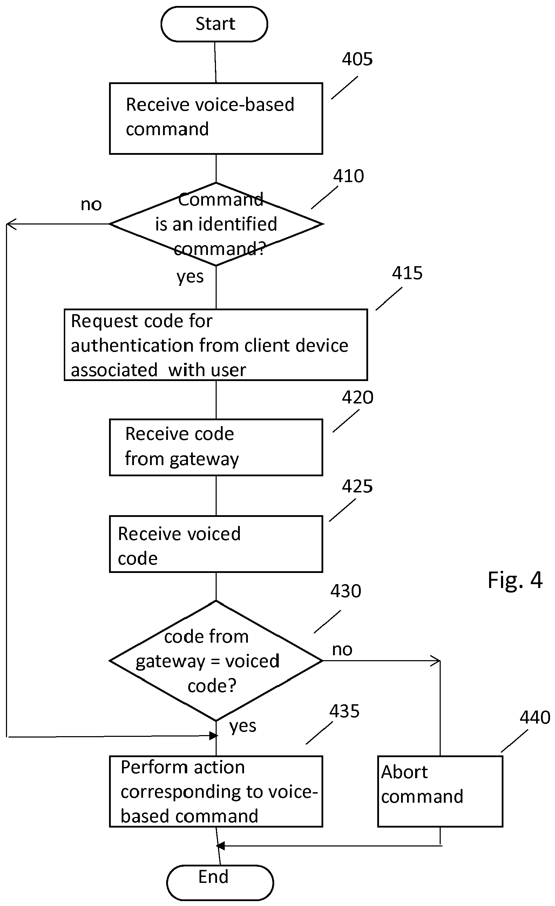

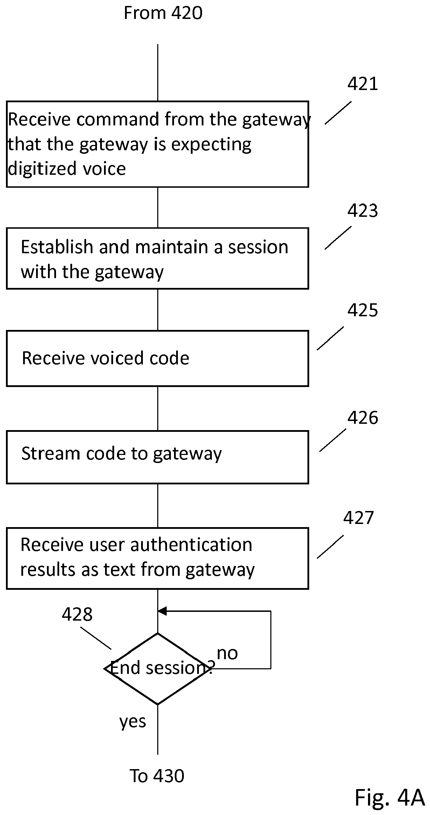

Fig. 4 is a flowchart of an exemplary voice-based device that is separate from a gateway in accordance with the principles of the proposed method and apparatus. At 405 the voice-based device receives a voice-based command. At 410 a test is performed to determine if the received voice-based command is one of a set of identified voice-based commands that require user authentication. If the received voice-based command is one of a set of identified voice-based commands that require user authentication, then at 415 the voice-based device requests a code from a client device associated with the user that uttered (spoke, voiced) the received voice-based command. A client device is a companion (personal) device. At 420 the voice-based device receives the code (token, value, number, captcha etc.) from the gateway. At 425 the voice-based device receives the code (token, value, number, captcha etc.) voiced (uttered, spoken) by the user. At 430 a test is performed to determine if the code (token, value, number, captcha etc.) received from the gateway is the same as (equal to) the code (token, value, number, captcha etc.) uttered (voiced, spoken) by the user. In order for this to be accomplished the voice-based code (token, value, number, captcha etc.) must be converted to text. If the code (token, value, number, captcha etc.) received from the gateway is the same as (equal to) the code (token, value, number, captcha etc.) uttered (voiced, spoken) by the user then at 435 the action corresponding to the voice-based command is performed. If the code (token, value, number, captcha etc.) received from the gateway is not the same as (not equal to) the code (token, value, number, captcha etc.) uttered (voiced, spoken) by the user then at 440 the voice-based command and any corresponding action is not performed (aborted). If the received voice-based command is not one of a set of identified voice-based commands that require user authentication then at 435 the action corresponding to the voice-based command is performed. If a command is given (given, spoken, voiced, uttered) by the user to the voice-based device that is different from the command that the gateway has, the voice-based device first converts the voice-based command into Intent. The gateway can either subscribe to this service (using MQTT) or Intent can invoke a computation trigger at the gateway. Amazon provides this functionality as GreenGrass. Whenever a notification (could be an HTTP notification) is received with the command, the gateway checks for the requirement of user authentication. Alternately, the gateway can also provide a representational state transfer (REST) API to invoke this operation at the voice-based device. REST provides interoperability between computer systems and allows requesting systems to access and manipulate textual representations of Web resources using a uniform and predefined set of stateless operations. If user authentication is required, the voice-based device is informed of the results of the user authentication with text that has to be converted to voice.

Once the user opens the APP with his/her password and requests a code, the gateway sends the encrypted (optional) to the companion (client) device for decryption. In tandem, the gateway then sends a command to the voice-based device that the gateway is expecting digitized audio (voice, speech). The voice-based device maintains the same session until the gateway commands the voice-based device for an end of the session. The voice-based device, upon receiving the voice-based code, streams the code to the gateway, which converts the voice-based code (digitized audio) to text and performs the user authentication check (test). The results of the user authentication test (check) are then sent as text to the voice-based device. The required command action is then performed or aborted.

Specifically, Fig. 4A is a flowchart of the above described alternative processing of a voice-based device that is separate from a gateway in accordance with the principles of the proposed method and apparatus. The alternative processing depicted in Fig. 4A occurs between 420 and 430 of Fig. 4. At 421the voice-based device receives a command from the gateway that eh gateway expects digitized voice. At 423 the voice-based device establishes and maintains a session with the gateway. At 425 the voice-based device receives the voiced code. At 426 the voice-based device streams the code to the gateway. At 427 the voice-based device receives the results of the user authentication performed by the gateway as text from the gateway. At 428 a test is performed to determine if the voice-based device received a command from the gateway to end the session. If the voice-based device received a command from the gateway to end the session then processing proceeds to 430. If the voice-based device has not received a command from the gateway to end the session then processing proceeds to 428.

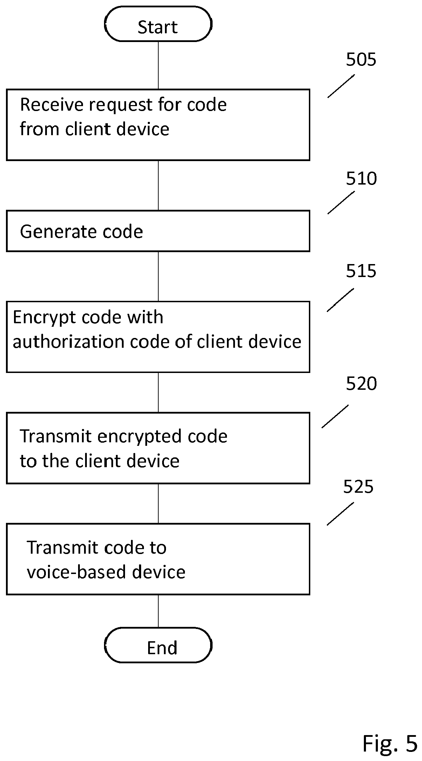

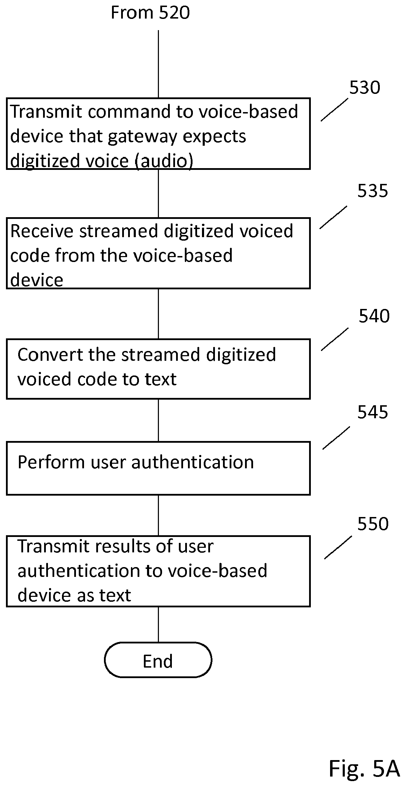

Fig. 5 is a flowchart of an exemplary gateway that is separate from a voice-based device in accordance with the principles of the proposed method and apparatus. At 505 the gateway receives a request for a code (token, value, number, captcha etc.) from the client device. At 510 the gateway generates the code (token, value, number, captcha etc.). At 515 the gateway encrypts the code (token, value, number, captcha etc.) with the authorization code of the client device. The gateway retrieves the authorization code for the client device from memory or a database in the gateway. At 520 the gateway transmits the encrypted code to the client device. At 525 the gateway transmits the code (token, value, number, captcha etc.) to the voice-based device.

The encryption of the code is done at the gateway and sent directly to the companion (client) device. Since the APP is provided in the client device, the APP performs the decryption of the code. When the decrypted code is then uttered (voiced, spoken, issued) by the user, the voice-based device converts the code to digitized voice (audio, speech) or any other pre-defined format and sends the code to the gateway for testing for the user authentication. Fig. 5A is a flowchart of an alternative exemplary embodiment of a gateway that is separate from a voice-based device in accordance with the principles of the proposed method and apparatus. Specifically, the processing of Fig. 5A is in lieu of 525. At 530 the gateway transmits a command to the voice-based device that the gateway expects digitized voice. At 535 the gateway receives streamed digitized voice code from the voice-based device. At 540 the gateway converts the streamed digitized voiced code to text. At 545 the gateway performs user authentication. At 550 the gateway transmits the results of the user authentication to the voice-based device as text.

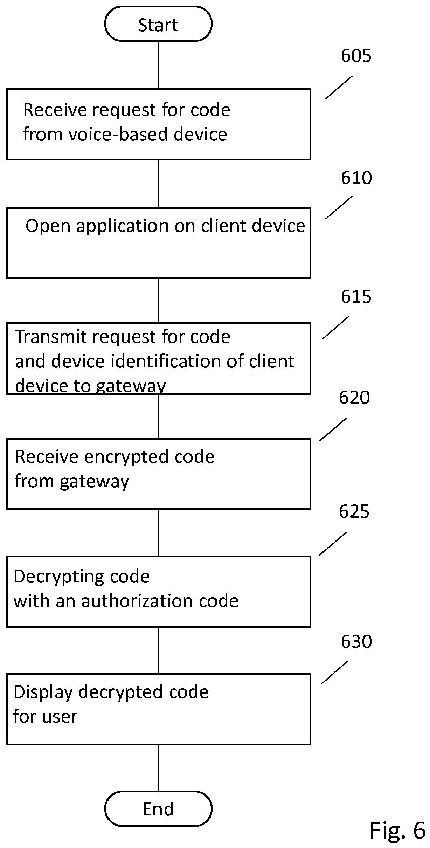

Fig. 6 is a flowchart of an exemplary client device in accordance with the principles of the proposed method and apparatus. At 605 the client device receives a request for the code (token, value, number, captcha etc.) from the voice-based device. At 610, the code (token, value, number, captcha etc.) application is opened on the client device. Once the user has opened the application on the client device, the user may also have to press a key etc. to proceed. In order to open the application, the user may have to access the client device by entering a password and/or user identification (userid). At 615, the client device transmits a request for the code (token, value, number, captcha etc.) and the device identification information (device id) of the client device to the gateway. The device id is transmitted to the gateway so that the gateway can retrieve the proper authorization code from memory or its database. At 620 the client device receives the encrypted code (token, value, number, captcha etc.) from the gateway. At 625 the client device decrypts the encrypted code received from the gateway with the authorization code of the client device. At 630 the client device displays the decrypted code (token, value, number, captcha etc.) for the user.

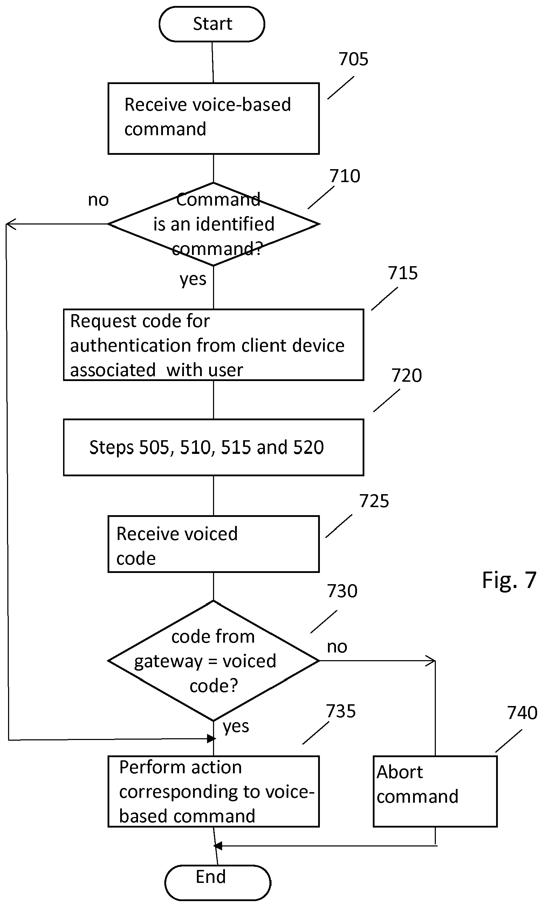

Fig. 7 is a flowchart of an exemplary voice-based device that is co-located with the gateway or within the gateway in accordance with the principles of the proposed method and apparatus. At 705 the voice-based device/gateway receives a voice-based command. At 710 a test is performed to determine if the received voice-based command is one of a set of identified voice-based commands that require user authentication. If the received voice-based command is one of a set of identified voice-based commands that require user authentication, then at 715 the voice-based device requests a code from a client device associated with the user that uttered the received voice-based command. A client device is a companion (personal) device. At 720 the voice-based device/gateway receives a request for a code (token, value, number, captcha etc.) from the client device. The voice-based device/gateway generates the code (token, value, number, captcha etc.). The voice-based device/gateway encrypts the code (token, value, number, captcha etc.) with the authorization code of the client device. The voice-based device/gateway retrieves the authorization code for the client device from memory or a database in the voice-based device/gateway. The voice-based device/gateway transmits the encrypted code to the client device. At 725 the voice-based device/gateway receives the code (token, value, number, captcha etc.) voiced (uttered, spoken) by the user. At 730 a test is performed to determine if the code that the voice-based device/gateway generated for and transmitted (sent, forwarded) to the client device is the same as (equal to) the code (token, value, number, captcha etc.) uttered (voiced, spoken) by the user. In order for this to be accomplished the voice-based code (token, value, number, captcha etc.) must be converted to text. If the code (token, value, number, captcha etc.) generated by the voice-based device/gateway is the same as (equal to) the code (token, value, number, captcha etc.) uttered (voiced, spoken) by the user then at 735 the action corresponding to the voice-based command is performed. If the code (token, value, number, captcha etc.) generated by the voice-based device/gateway is not the same as (not equal to) the code (token, value, number, captcha etc.) uttered (voiced, spoken) by the user then at 740 the voice-based command and any corresponding action is not performed (aborted). If the received voice-based command is not one of a set of identified voice-based commands that require user authentication then at 735 the action corresponding to the voice-based command is performed.

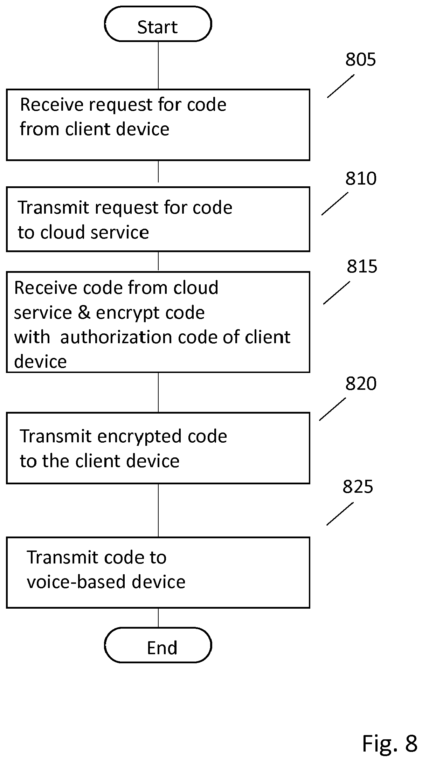

Fig. 8 is a flowchart of an exemplary gateway in communication with cloud service in accordance with the principles of the proposed method and apparatus. At 805 the gateway receives a request for a code (token, value, number, captcha etc.) from the client device. At 810 the gateway transmits a request for a code (token, value, number, captcha etc.) to the cloud service. At 815 the gateway receives the requested code (token, value, number, captcha etc.) from the cloud service and encrypts the received code (token, value, number, captcha etc.) with the authorization code of the client device. The gateway retrieves the authorization code for the client device from memory or a database in the gateway. At 820 the gateway transmits the encrypted code (token, value, number, captcha etc.) to the client device. At 825 the gateway transmits the code to the voice-based device. In an alternative embodiment, the processing of 825 is replaced with the processing of Fig. 5A.

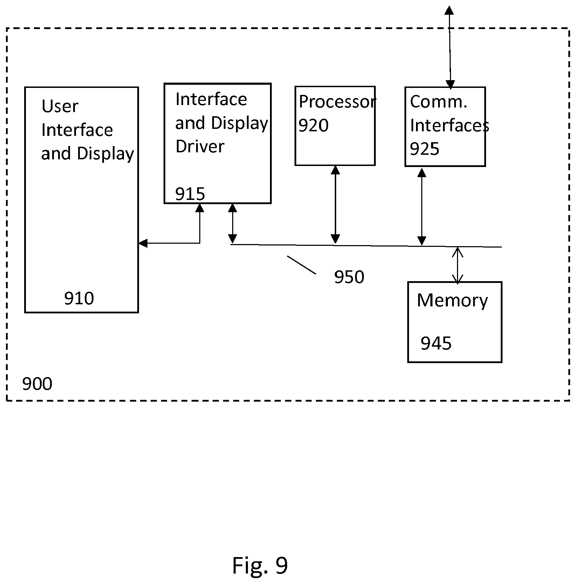

Fig. 9 is a block diagram of an exemplary apparatus, such as a gateway, voice-based device and/or client device for practicing the proposed method. The block diagram includes a bus-oriented 950 configuration interconnecting a processor (processing unit) 920, and a memory 945. The configuration of Fig. 3 also includes a communication interface 925. The communication interface 925 may be wired or wireless and may in fact, include two interfaces - one for wired line communication and one for wireless communication. User interface and display 910 is driven by interface circuit 915. The user interface and display 910 and interface circuit 915 are not limited to "displaying" the message. As used herein displaying may actually be displaying the message on a display screen but may also include audio (voice).

Processor 920 provides computation functions for the gateway, voice-based device and/or client device, such as depicted in Figs. 1 to 3. The processor 920 can be any form of CPU or controller that utilizes communications between elements of the gateway, voice-based device and/or client device to control communication and computation processes. Those of skill in the art recognize that bus 950 provides a communications path between the various elements of embodiment 900 and that other point-to-point interconnection options (e.g. non-bus architecture) are also feasible.

Any or all of the functionality included in the network access device may be embodied as application specific integrated circuits (ASICs), field programmable gate arrays (FPGAs), reduced instruction set computers (RISCs) or any other equivalent separate type of co-processor integrated into processor 920.

Memory 945 can act as a repository for memory related to any of the methods that incorporate the functionality of the gateway, voice-based device and/or client device. Memory 945 can provide the repository for storage of information such as program memory, downloads, uploads, or scratchpad calculations. Those of skill in the art will recognize that memory 945 may be incorporated all or in part of processor 920. Communication interface 925 has both receiver and transmitter elements for wired line or wireless communications. Program instructions for operation of the processor of the gateway, voice-based device and/or client device may be in memory 945 or may be in processor. Memory 945 may also include a database.

The processing in accordance with the method shown in Figs. 1 to Fig. 8 is predominantly performed in the processor 920. The processor performs the steps/acts of the method but the reception and transmission between the gateway, voice-based device and/or client device 900 and each of the other devices or the cloud service is through the communications interface 925. As described above the user interface and display 910 and the interface circuit 915 play an important role in generating the messages and in displaying any responses, such as the code (token, value, number, captcha etc.) where message or response may be text, audio (voice).

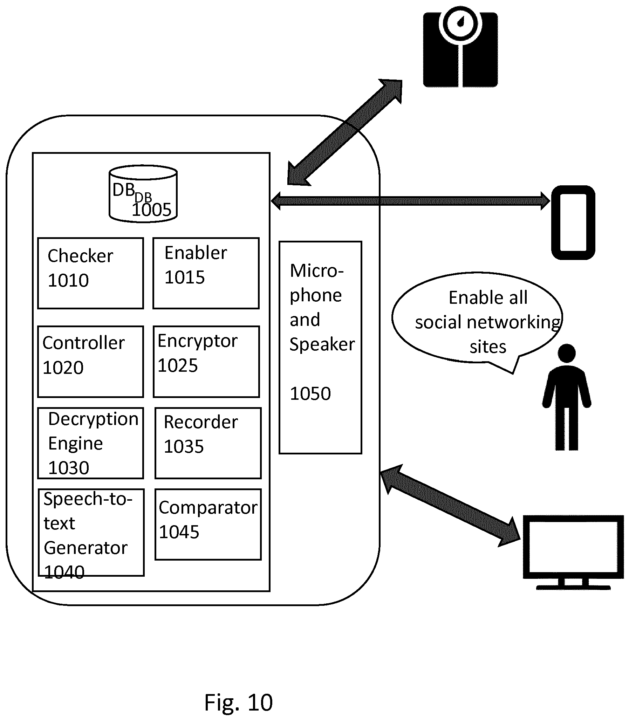

Fig. 10 is a block diagram of an exemplary gateway that includes a microphone way in accordance with the principles of the proposed method and apparatus. The gateway includes a microphone and speaker 1050, which, while not shown explicitly on Fig. 9 can be considered part of the user interface and display 910 and interface and display driver 915. Also shown on Fig. 10 is a database (DB) 1005 which can be included in memory 945. The remaining components can be thought of as modules that are part of the processor 920 and perform specific functions. There may be more or fewer objects and still remain within the spirit of the proposed method and apparatus. The functions of the encryptor 1025, recorder 1035, speech to text generator (converter) 1040, decryption engine 1030 and comparator 1045 should be self-explanatory. The checker 1010 performs the test to determine if the voice-based command is one of a set of identified (specific, pre-defined) commands that require user authentication. The controller 1020 controls the execution of all of the other functions (modules). The enabler 1015 interfaces with other devices to perform the actions corresponding to the user authenticated voice-based command or a voice-based command not requiring user authentication.

The proposed method and apparatus is easily detectable. Whenever the user (responsible adult, administrator) issues (speaks, voices, utters) a voice-based command that requires authentication, the responsible adult (administrator, user) will receive a number (code, token, number, value, captcha etc.) on his/her companion (personal) device which the responsible adult would use to complete the authentication. The generated number (code, token, number, value, captcha etc.) will be sent (forwarded, transmitted) using a secure connection to the responsible adult's (administrator's, user's) companion (personal) device.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "at least one of A, B and C," the phrase means "only A, or only B, or only C, or any combination of A, B and C."

## Claims

1. A method, comprising:
receiving (405, 705) a voice command;
determining (410, 710) if said received voice command is one of a set of identified voice commands that require authentication; and
in the case where it is determined that said voice command is one of a set of identified voice commands that require authentication:
receiving (425, 725) a voiced code, said voiced code corresponding to a code transmitted to a selected client device in response to said voice command; and
performing (435, 440, 735, 740), responsive to a comparison (430, 730) of said received voiced code and a code corresponding to the code transmitted to the selected client device, an action corresponding to said received voice command;
otherwise performing (435, 440, 735, 740) said action corresponding to said received voice command in the case where it is determined that said voice command does not require authentication.

2. An apparatus, comprising at least one processor configured for:
receiving (405, 705) a voice command;
determining (410, 710) if said received voice command is one of a set of identified voice commands that require authentication; and
in the case where it is determined that said voice command is one of a set of identified voice commands that require authentication:
receiving (425, 725) a voiced code, said voiced code corresponding to a code transmitted to a selected client device in response to said voice command; and
performing (435, 440, 735, 740), responsive to a comparison (430, 730) of said received voiced code and a code corresponding to the code transmitted to the selected client device, an action corresponding to said received voice command;
otherwise performing (435, 440, 735, 740) said action corresponding to said received voice command in the case where it is determined that said voice command does not require authentication.

3. The method according to claim 1 or the apparatus according to claim 2, further comprising, wherein the at least one processor is further configured for generating (510) said code for transmission to the selected client device for voicing by the user.

4. The method according to claim 1 or 3 or the apparatus according to claim 2 or 3, comprising, wherein the at least one processor is configured for transmitting (520) the code to the selected client device in response to a request from the selected client device.

5. The method or the apparatus according to claim 4, wherein the code is encrypted with an authorization code related to the selected client device.

6. The method according to any one of claims 1 and 3 to 5 or the apparatus according to any one of claims 2 to 5, comprising, wherein the at least one processor is configured for:
establishing (423) a session with a gateway;
streaming (426) said voiced code to said gateway; and
receiving (427) data representative of said authentication from said gateway.

7. The method according to claim 1 or the apparatus of claim 2, wherein said at least one processor is configured for, further comprising:
receiving (421) a command for said code from a gateway;
streaming (426) said code to said gateway in response to said command; and
receiving (427) results from said authentication from said gateway.

8. A method comprising:
receiving (620) a code, said code being transmitted in response to a voice command received at a voice based device,
providing (625, 630) said code to a user to enable said code to be voiced to the voice based device to cause the voice based device to respond to the voice command in the case where the voiced code corresponds to data representative of the received code.

9. An apparatus comprising at least one processor configured for:
receiving (620) a code, said code being transmitted in response to a voice command received at a voice based device,
providing (625, 630) said code to a user to enable said code to be voiced to the voice based device to cause the voice based device to respond to the voice command in the case where the voiced code corresponds to data representative of the received code.

10. The method according to claim 8 or the apparatus according to claim 9, wherein said at least one processor is configured for, further comprising:
receiving (620) said code, said code being encrypted;
decrypting (625) said encrypted code; and
displaying (630) said decrypted code to the user.

11. The method or the apparatus according to claim 10, wherein the received code is encrypted with an authorization code related to the selected client device.

12. A method, comprising:
receiving (505) a request for a code;
generating (510) said code;
transmitting (515, 520) said code to a client device in response to the request, said code encrypted with an authorization code;
receiving (535) data representative of a voiced code;
comparing (545) said received data representative of said voiced code with said code; and
transmitting (550) results of said comparison to a voice-based device.

13. An apparatus, comprising at least one processor configured for:
receiving (505) a request for a code;
generating (510) said code;
transmitting (515, 520) said code to a client device in response to the request, said code encrypted with an authorization code;
receiving (535) data representative of a voiced code;
comparing (545) said received data representative of said voiced code with said code; and
transmitting (550) results of said comparison to a voice-based device.

14. The method according to any one of claims 1 and 3 to 7 or 12 or the apparatus according to any one of claims 2 to 7 or 13, wherein said voiced code is converted to text in order to perform said comparison.

15. A computer-readable medium comprising instructions, which, when executed by a computer, cause the computer to carry out the method of any of claims 1, 3 to 8, 10 to 12 and 14.
